**Europäisches Patentamt**

**European Patent Office**

**Office européen des brevets**

(19)

(11) Veröffentlichungsnummer : **0 289 873 B1**

(12)

# EUROPÄISCHE PATENTSCHRIFT

(45) Veröffentlichungstag der Patentschrift :
20.03.91 Patentblatt 91/12

(51) Int. Cl.$^5$ : **B60H 1/24**

(21) Anmeldenummer : **88106363.0**

(22) Anmeldetag : **21.04.88**

(54) **Luftausströmvorrichtung einer Heiz- und/oder Klimaanlage insbesondere für den Fondraum eines Personenkraftwagens.**

(30) Priorität : **04.05.87 DE 3714820**

(43) Veröffentlichungstag der Anmeldung :
**09.11.88 Patentblatt 88/45**

(45) Bekanntmachung des Hinweises auf die
Patenterteilung :
**20.03.91 Patentblatt 91/12**

(84) Benannte Vertragsstaaten :
**DE FR GB IT SE**

(56) Entgegenhaltungen :
**DE-A- 1 077 997**
**DE-A- 3 119 557**
**DE-A- 3 309 560**

(56) Entgegenhaltungen :
**US-A- 2 234 268**
**PATENT ABSTRACTS OF JAPAN, Band 7, Nr. 68 (M-201)[1213], 19. März 1983; & JP-A-57 209 419 (AKIRA SHIYOUJI) 22-12-1982**

(73) Patentinhaber : **Bayerische Motoren Werke Aktiengesellschaft**
**Patentabteilung AJ-30 Postfach 40 02 40**
**Petuelring 130**
**W-8000 München 40 (DE)**

(72) Erfinder : **Johnson, Paul**
**Leopoldstrasse 43**
**W-8000 München 40 (DE)**
Erfinder : **Karnebogen, Karl Wilhelm**
**Buchenstrasse 1**
**W-8081 Kottgeisering (DE)**

## Beschreibung

Luftausströmvorrichtung einer Heiz- und/oder Klimaanlage für den Fondraum eines Personenkraftwagens.

Die Erfindung bezieht sich auf eine Luftausströmvorrichtung der im Oberbegriff des ersten Anspruchs angegebenen Art und geht aus von der gattungsbildenden DE-A-30 02 351.

Beschrieben ist darin eine Zusatzvorrichtung für Klima-Steuereinheiten in Motorfahrzeugen dergestalt, daß im Fondraum des Fahrzeuges ein Gehäuse angeordnet ist, welches einem Luftzuführungskanal der Fahrzeug-Klimaanlage klimatisierte Luft entnimmt und diese mittels eines innerhalb des Gehäuses vorgesehenen Gebläses gezielt in den Fahrzeug-Fondraum fördert. Auf diese Weise wird die Intensität der Fondraumbelüftung derjenigen des vorderen Fahrzeug-Innenraumes angeglichen, da jenes Gebläse die durch die längeren Luftzuführungskanäle verursachten höheren Strömungswiderstände auszugleichen vermag. Dennoch kann auch damit den Fond-Passagieren keine ähnlich angenehme Klimatisierung geboten werden, wie sie Personen im vorderen Sitzbereich genießen. Während dort viele und verschiedenstartig angeordnete Ausströmer vorhanden sind (im Fußraum, an verschiedenen Stellen des Armaturenbrettes und teilweise sogar in den Türen), muß für den Fondraum bislang ein Ausströmer der gattungsbildenden Schrift genügen. Zwar wäre es denkbar, auch im Fondraum Ausströmer in den Seitenwänden oder Seitentüren vorzusehen, jedoch ist diese Lösung äußerst aufwendig, da die Luftführungskanäle innerhalb von zu schwenkenden Türen oder um diese herum geführt werden müßten und nochmals vergrößerte Längen aufweisen würden. Eine andere Möglichkeit läge in der Verwendung von variabel einstellbaren verlängerten Warmluftdüsen, wie sie beispielsweise aus der DE-A-33 09 560 (insbesondere Fig. 3, die eine Anordnung zwischen den Vordersitzen zeigt oder dem DE-U-83 37 426 bekanntgeworden sind. Dabei werden jeweils flexible Schläuche verwendet, um die Ausströmdüsen in die gewünschte Position zu bringen. Diese Lösung ist aber nicht nur unter stylistischen Gesichtspunkten äußerst unschön, sondern zeigt auch lediglich eine beschränkte Funktionalität. So weist der flexible Schlauch aufgrund der zu erwartenden Verwindung eine hohe Einfallneigung auf, zeigt in seiner Positionierung ein unkontrollierbares Verhalten und erfordert wegen der faltenbalgartigen Gestaltung einen unvertretbar großen Durchmesser. Ferner schränken derartige in den Fondraum hineinreichende Warmluftdüsen die Platzverhältnisse stets ein, also auch dann, wenn sie nicht oder nur minimal benötigt werden.

Aufgabe der vorliegenden Erfindung ist es daher, eine Luftausströmvorrichtung einer Klimaanlage für einen Pkw-Fondraum bereitzustellen, welche eine möglichst angenehme und vielseitige Positionierung des ausströmenden Luftstromes erlaubt, wobei zugleich eine hohe Funktionalität sichergestellt sein soll. Desweiteren soll zumindest bei Nichtbedarf der Luftausströmungsvorrichtung deren Ausströmkanal die Platzverhältnisse im Fondraum möglichst wenig beeinflußen. Diese Aufgabe wird durch die kennzeichnenden Merkmale des ersten Anspruchs gelöst.

Ein schwenkbar angeordneter und im wesentlichen aus starren Rohren aufgebauter Ausströmkanal erlaubt sowohl eine variable Positionierung und vermeidet daneben die o.g. Nachteile von flexiblen Schläuchen. Indem jener erfindungsgemäße Ausströmkanal zumindest in einer Schwenkposition – vorzugsweise in jener Position, in welcher er sich bei Nichtbedarf befindet – in andere Innenausstattungs-Bauteile des Fondraumes integriert ist, beansprucht er dann keinen zusätzlichen Raum und schränkt die Platzverhältnisse im Fondraum nicht weiter ein.

Zwar ist auch aus der US-A-2 234 268 eine Luftausströmvorrichtung für einen PKW-Fondraum bekannt geworden, hierbei ist jedoch die Ausströmvorrichtung als einfacher Umluftventilator ausgebildet, so daß keine Verbindung zu einer Heiz- und/oder Klimaanlage erforderlich ist. Desweiteren zeigt jene Schrift keinen verschwenkbaren Ausströmkanal.

Vorteilhafte Aus- und Weiterbildungen beschreiben die Unteransprüche. So kann der Ausströmkanal zur weiteren Flexibilisierung seiner Position teleskopartig verlängerbar oder zusätzlich mit kugelförmigen Gelenken versehen sein. Besonders vorteilhaft ist es jedoch, den Ausströmkanal gemäß Anspruch 4 an die Rückseite der Rückenlehne eines Fahrzeug-Vordersitzes anzubinden bzw. anbindbar zu gestalten. Damit ist der Ausströmkanal einfach fixierbar und bietet sogar deutlich vielfältigere Positionierungs und somit Klimatisierungsmöglichkeiten, als sie bislang im ohnehin gut klimatisierten vorderen Fahrzeug-Innenraum angeboten werden. Zudem kann ein derartiger Ausströmkanal stylistisch äußerst gefällig gestaltet werden. Auch ist es zur Vereinfachung der Bedienung vorteilhaft, zumindest ein Bedien- oder Stellelement nahe der Ausströmöffnung des schwenkbaren Ausströmkanales anzuordnen. Möglich sind hierfür beispielsweise an sich bekannte Ausströmgitter mit Stellklappen und Rändelrädern.

Schließlich bildet Anspruch 7 eine erfindungsgemäße Luftausströmvorrichtung dahingehend weiter, daß unabhängig von den Temperierungswünschen im vorderen Fahrzeuginnenraum für den Fondraum eigene Klimabedingungen einstellbar sind. Dazu ist neben dem Zusatzgebläse in der Luftausströmvorrichtung eine separate Klimaanlageneinheit vorgesehen. Zwar sind aus dem DE-U-77 31 774 sowie der DE-A-33 39 803 eigene Klimaanlageneinheiten für den Fondbereich bekannt, jedoch sind in jenen Schriften keine weiteren Anregungen für eine erfindungsgemäße Luftausströmvorrichtung mit schwenkbaren Ausströmkanälen gegeben.

An dieser Stelle soll ausdrücklich darauf hingewiesen werden, daß eine in der vorliegenden Erfindung erwähnte Klimaanlage sowohl als einfacher Heizungswärmetauscher, als reiner Klimaanlagenverdampfer oder auch als kombinierte Heiz-Klimaanlage mit Gebläseeinheit ausgebildet sein kann. Für das Wesen der Erfindung ist dies völlig unerheblich.

Im folgenden wird die vorliegende Erfindung anhand zweier bevorzugter Ausführungsbeispiele näher beschrieben. Es zeigt :

Fig. 1 eine auf dem Mitteltunnel eines Pkw angeordnete Luftausströmvorrichtung mit versenkbarem Ausströmkanal,

Fig. 2 eine Aufsicht auf einen an der Rückenlehne angebundenen Ausströmkanal, wobei die Luftströmung durch Pfeile dargestellt ist sowie,

Fig. 3 eine Seitenansicht der Anordnung aus Fig. 2, wobei die möglichen Lageänderungen durch Pfeile dargestellt sind.

Fig. 4 ein im Ausströmkanal vorgesehenes kugelförmiges Gelenk im Schnitt.

Im Fondraum eines Pkw, begrenzt durch den Vordersitz 1 sowie die Rücksitzbank 2 ist auf dem Mitteltunnel 3 eine Luftausströmvorrichtung 4 angeordnet, welche eine nicht dargestellte Lufteintrittsöffnung, ein Gebläse 5, einen Wärmetauscher 6, sowie eine Luftaustrittsöffnung 7 aufweist. An jene Luftaustrittsöffnung 7 schließt sich ein Ausströmkanal 8 an.

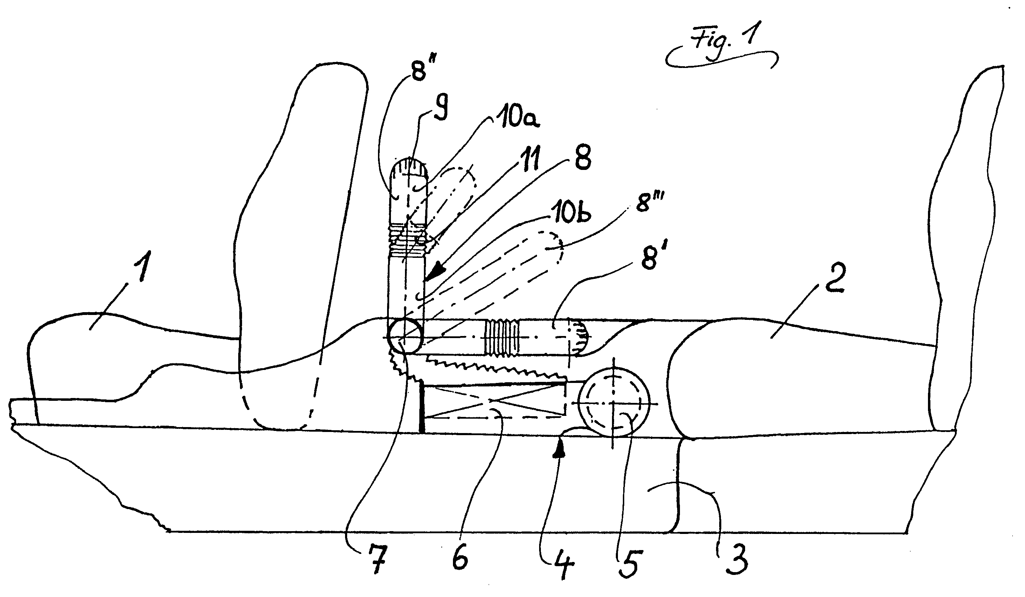

Im ersten Ausführungsbeispiel nach Fig. 1 ist dieser Ausströmkanal 8 schwenkbar an der Luftausströmvorrichtung 4 derart angeordnet, daß er zumindest in einer Position – nämlich der Position 8′ – räumlich im Gehäuse der Luftausströmvorrichtungs 4 integriert ist. Bei Bedarf kann er in andere Positionen – so beispielsweise 8″, 8‴ – gebracht werden.

Das freie Ende des Ausströmkanales 8 trägt ein an sich bekanntes um mit Stellklappen versehenes Belüftungsgitter 9. Weiter Positionierungsmöglichkeiten sind dadurch gegeben, daß der Ausströmkanal 8 aus zwei an sich starren Rohren 10a und 10b aufgebaut ist, welche über einen flexiblen Faltenbalg 11 miteinander verbunden sind.

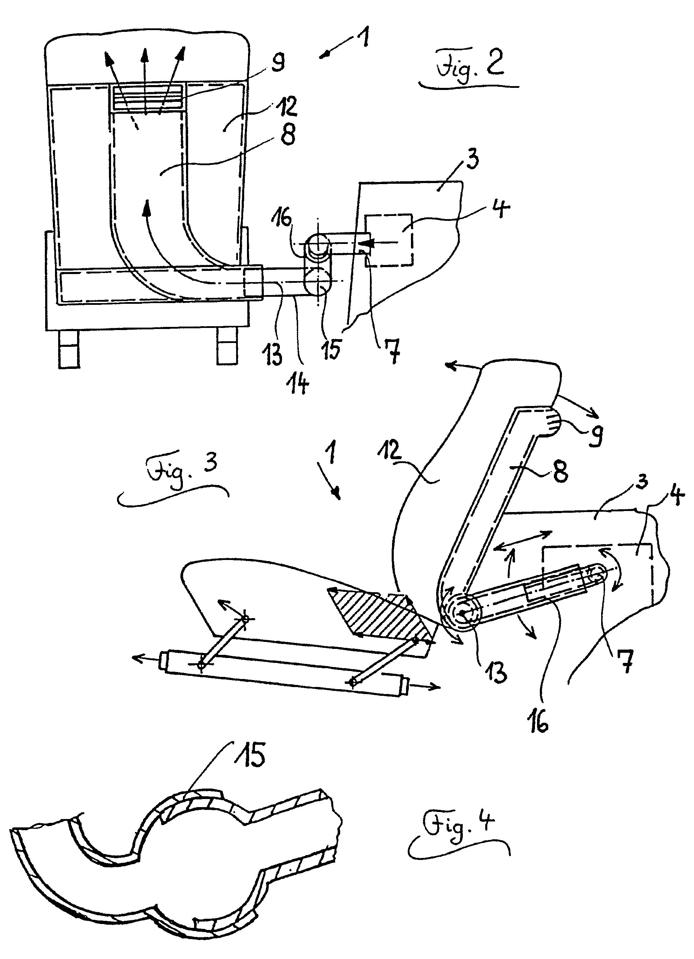

Die Fig. 2 und 3 zeigen ein weiteres Ausführungsbeispiel, bei welchem der Ausströmkanal 8 an der Rückseite der Rückenlehne 12 des Vordersitzes 1 angebunden ist. Auch dieser Ausströmkanal ist an seinem freien Ende mit einem Belüftungsgitter 9 versehen und ist, da die Rückenlehne 12 des Vordersitzes 1 schwenkbar ist, um die gemeinsame Achse 13 schwenkbar angeordnet. Gebildet wird diese Schwenkachse 13 von einem Rohrstück 14, welches seinerseits am Vordersitz 1 befestigt ist. Da der gesamte Vordersitz 1 – wie durch Pfeile dargestellt- sowohl in seiner Längsposition als auch seiner Höhenposition verstellbar ist, steht jenes Rohrstück 14 über eine Kugelgelenkverbindung 15 sowie eine Teleskopverbindung 16 mit der Luftausströmvorrichtung 4 in Verbindung.

Eine mögliche Kugelgelenkverbindung 15 ist beispielhaft in Fig. 4 im Detail dargestellt.

Somit ist der Ausströmkanal also in der Lage, allen Bewegungen der Rückenlehne 12 zu folgen, wobei das in der Nähe des oberen Endes der Rückenlehne 12 befindliche Belüftungsgitter 9, welches selbstredend auch mit Bedien- und Stellelementen für die Klimaanlage bzw. den austretenden Luftstrom versehen sein kann, eine optimale Position innehat für eine den Fondraumpassagieren angenehme Klimatisierung.

Die einzelnen Bauteile bzw. Rohrstücke dieses erfindungsgemäßen Ausströmkanales können dabei in an sich bekannter Weise als Spritzgußteile gefertigt sein. Deren tatsächliche konstruktive Ausgestaltung ist für das Wesen der vorliegenden Erfindung aber unerheblich, wesentlich ist die Tatsache, eine Luftausströmvorrichtung einer Klimaanlage für den Fondraum eines Personenkraftwagens mit einem schwenkbar angeordneten Ausströmkanal zu versehen, welcher zumindest in einer Schwenkposition räumlich in bzw. an anderen im Pkw-Fondraum angeordneten Innenausstattungs-Bauteilen integriert ist.

**Ansprüche**

1. Luftausströmvorrichtung einer Heiz- und/oder Klimaanlage für den Fondraum eines Personenkraftwagens, welche im Bereich zwischen oder hinter den Vordersitzen angeordnet ist, gekennzeichnet durch zumindest einen schwenkbaren und im wesentlichen aus starren Rohren (10a, 10b) aufgebauten Ausströmkanal (8), welcher zumindest in einer Schwenkposition (8′) räumlich in oder an anderen im Personenkraftwagen-Fondraum angeordneten Innenausstattungs-Bauteilen integriert ist.

2. Luftausströmvorrichtung nach Anspruch 1, dadurch gekennzeichnet, daß der Ausströmkanal (8) teleskopartig verlängerbar ist.

3. Luftausströmvorrichtung nach Anspruch 1 oder 2, dadurch gekennzeichnet, daß der Ausströmkanal (8) mit zumindest einem kugelförmigen Gelenk (15) versehen ist.

4. Luftausströmvorrichtung nach einem der vorangegangenen Ansprüche, dadurch gekennzeichnet, daß der Ausströmkanal (8) an die Rückseite einer Rückenlehne (12) eines in Pkw-Fahrtrichtung vor dem Fondraum angeordneten Sitzes (1) anbindbar bzw. angebunden ist.

5. Luftausströmvorrichtung nach einem der vorangegangenen Ansprüche, dadurch gekennzeichnet, daß der Ausströmkanal (8) zumindest in einer Schwenkposition für die ausströmende Luft selbsttätig geschlossen ist.

6. Luftausströmvorrichtung mit verschiedenartigen Bedien- und Stellelementen zur Regulierung des ausströmenden Luftstromes nach einem der vorangegangenen Ansprüche, dadurch gekennzeichnet, daß zumindest eines der Bedien- oder Stellelemente nahe der Ausströmöffnung des schwenkbaren Ausströmkanales (8) angeordnet ist.

7. Luftausströmvorrichtung mit einem Gebläse nach einem der vorangegangenen Ansprüche, dadurch gekennzeichnet, daß in der Luftausströmvorrichtung (4) eine Klimaanlageneinheit (5, 6) vorgesehen ist.

**Revendications**

1. Buse d'aération d'une installation de chauffage et/ou de climatisation pour le siège arrière d'une voiture automobile, qui se trouve placée dans la zone intermédiaire ou à l'arrière des sièges avant, caractérisée en ce qu'il existe au moins un canal d'émission (8) pivotable et constitué essentiellement de tubes rigides (10a, 10b), qui se trouve intégré au moins dans une position de pivotement dans ou contre d'autres éléments d'équipement intérieurs du compartiment arrière de la voiture automobile.

2. Buse d'aération selon la revendication 1, caractérisée en ce que le canal d'émission (8) peut être prolongé de façon télescopique.

3. Buse d'aération selon l'une quelconque des revendications 1 ou 2, caractérisée en ce que le canal d'émission (8) est muni d'au moins une articulation (15) sphérique.

4. Buse d'aération selon l'une quelconque des revendications 1 à 3, caractérisée en ce que le canal d'émission (8) peut être fixé ou est fixé sur la face arrière d'un dossier (12) arrière d'un siège placé devant les sièges arrière (1) dans le sens d'avancement du véhicule.

5. Buse d'aération selon l'une quelconque des revendications 1 à 4, caractérisée en ce que le canal d'émission (8) est fermé automatiquement pour l'air à émettre au moins dans une position de pivotement.

6. Buse d'aération avec des éléments de commande et de réglage de types différents pour régler le flux d'air à émettre, selon l'une des revendications 1 à 5, caractérisée en ce que, au moins, un des éléments de commande et de réglage, est placé à proximité de l'ouverture d'émission du canal d'émission pivotable (8).

7. Buse d'aération avec un ventilateur selon l'une des revendications 1 à 6, caractérisée en ce que dans la buse d'aération (4) est prévue une unité d'installation climatique (5, 6).

**Claims**

1. An air vent device of a heating and/or air-conditioning installation for the back seat space of a passenger car, which is arranged in the region between or behind the front seats, characterised by at least one pivotable vent passage (8) built up essentially from rigid tubes (10a, 10b), which at least in one pivotal position (8') is spatially integrated into or attached to other internal equipment components arranged in the passenger car back seat space.

2. An air vent device according to Claim 1, characterised in that the vent passage (8) is telescopically extensible.

3. An air vent device according to Claim 1 or 2, characterised in that the vent passage (8) is provided with at least one ball joint (15).

4. An air vent device according to any one of the preceding Claims, characterised in that the vent passage (8) is bindable or bound to the back of a back rest (12) of a seat (1) arranged in front of the back seat space, in the direction of travel of a passenger car.

5. An air vent device according to any one of the preceding Claims, characterised in that the vent passage (8) is automatically closed for the outflowing air at least in one pivotal position.

6. An air vent device with operating and setting elements of different kinds for the regulating of the outflowing air current according to any one of the preceding Claims, characterised in that at least one of the operating or setting elements is arranged close to the outflow opening of the pivotable vent passage (8).

7. An air vent device having a blower according to any one of the preceding Claims, characterised in that an air conditioning installation unit (5, 6) is provided in the air vent device (4).

Fig. 1

EP 0 289 873 B1

Fig. 2

Fig. 3

Fig. 4